# FASCICULE DE BREVET EUROPEEN

(11) **EP 0 706 188 B1**
(45) Date de publication et mention de la délivrance du brevet: **19.03.2003**
(21) Numéro de dépôt: 95402210.9
(22) Date de dépôt: 03.10.1995
(51) Int. Cl.: G21C 15/18, F28F 27/00

(54) **Dispositif de contrôle du flux de chaleur par vanne thermique**
Durch thermisches Ventil wirkendes Wärmeflussregelsystem
Thermal valve operated heat flux control system

(30) Priorité: 05.10.1994 FR 9411902
(43) Date de publication de la demande: 10.04.1996
(73) Titulaire: COMMISSARIAT A L'ENERGIE ATOMIQUE, 75015 Paris (FR)
(72) Inventeur: Gautier, Guy-Marie, F-84120 Pertuis (FR); Aujollet, Patrick, F-84120 Pertuis (FR); Pignatel, Jean-François, F-13490 Jouques (FR)
(74) Mandataire: Dubois-Chabert, Guy

(56) Documents cités:
- FR-A- 2 502 828
- US-A- 5 202 083
- US-A- 5 217 682

## Description

### Domaine technique

La présente invention a pour but le contrôle du flux de chaleur au travers d'un échangeur immergé dans une piscine, à l'aide d'une vanne thermique. Le procédé décrit et l'appareil correspondant peuvent trouver une application dans de nombreux domaines. A titre d'exemple, cette invention sera décrite en application à un réacteur nucléaire où l'on désire évacuer une puissance résiduelle.

On rappellera d'abord ce qu'est la puissance résiduelle d'un réacteur. Lorsqu'on arrête un réacteur en introduisant une forte contre réactivité dans le coeur, le nombre de fissions dans ce dernier devient très rapidement négligeable au bout d'un temps de l'ordre de quelques secondes. En revanche, la radioactivité des produits de fission, qui se sont développés dans le coeur pendant la période de fonctionnement normal du réacteur, continue à dégager une puissance importante qui peut représenter quelques pour-cent de la puissance normale du réacteur. Quelle que soit la cause de l'arrêt, il est nécessaire de continuer d'évacuer cette puissance par un moyen sûr pour éviter un échauffement excessif du coeur qui pourrait conduire à sa fusion.

### Etat de la technique

Dans les réacteurs actuels, on trouve de nombreux dispositifs pour évacuer cette puissance résiduelle. Ces dispositifs sont constitués d'une ou plusieurs boucles annexes, en parallèle ou en dérivation des boucles principales d'extraction de la chaleur lors du fonctionnement normal. Les boucles annexes destinées à l'évacuation de la puissance résiduelle sont utilisées uniquement lorsque le réacteur est en arrêt. La chaleur émise par le coeur du réacteur est donc évacuée vers une source froide par deux types de circuit, l'un constitué des boucles principales pour le fonctionnement normal, l'autre constitué des boucles annexes pour le fonctionnement en arrêt et destiné à l'évacuation de la puissance résiduelle. Cela nécessite un système pour permettre d'aiguiller le flux thermique vers la source froide appropriée. Généralement l'aiguillage est réalisé en fermant ou en ouvrant des vannes mécaniques sur les circuits.

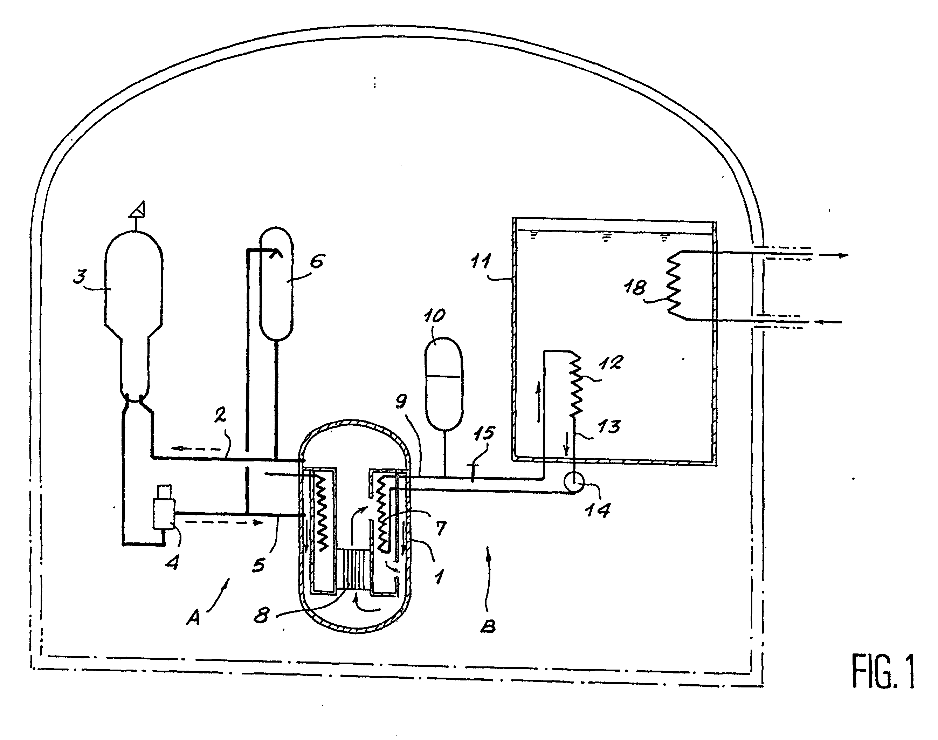

Sur la figure 1, on fournit un exemple de réalisation d'un dispositif d'évacuation d'une puissance résiduelle d'un réacteur à eau pressurisée, ayant pour source froide un échangeur immergé en piscine. Ce principe de source froide s'inspire de réacteurs décrits dans la littérature, comme AP600 ou SIR ("Safe Integral Reactor").

Sur cette figure, on reconnaît la cuve 1 d'un réacteur à eau pressurisée et une des boucles principales A du circuit primaire composée d'une branche chaude 2, du générateur de vapeur 3, de la pompe 4, et de la branche froide 5. Sur la branche chaude d'une des boucles principales est situé un pressuriseur 6. A l'intérieur de la cuve 1 est placé un échangeur 7 destiné à évacuer la puissance résiduelle dégagée par le coeur 8.

L'échangeur 7 fait partie d'une boucle B comportant une branche chaude 9 sur laquelle se trouve un vase d'expansion 10. La branche 9 pénètre dans une piscine 11 remplie d'eau et alimente un échangeur 12 situé dans la piscine 11. La sortie de cet échangeur 12 s'effectue par une tuyauterie 13 constituant la branche froide qui retourne à l'échangeur 7. La source froide, pour évacuer la puissance résiduelle, est donc réalisée par l'échangeur immergé 12.

Généralement, l'échangeur 12 est constitué d'un faisceau de tubes dont l'écoulement est descendant. D'autres types d'échangeurs sont également utilisables : on peut citer des tubes en U inversés, à baïonnettes ou à plaques. La pompe 14 sur le tuyau 13 n'est pas indispensable. Elle présente un avantage pour améliorer la convection dans la boucle B en question mais, si la convection naturelle est suffisante, la pompe 14 peut être supprimée.

Cette boucle B n'est utilisée que pour l'évacuation de puissances faibles, comme la puissance résiduelle, lorsque cela est nécessaire. Une ou plusieurs vannes sont donc placées sur cette boucle afin de contrôler et commander le débit du fluide caloporteur de cette boucle. Pour la simplification de la représentation de ces organes, seule une vanne mécanique 15 sur la branche 9 a été représentée sur la figure 1. Cette vanne 15 est donc généralement fermée en fonctionnement normal et ouverte lorsque le réacteur est à l'arrêt, afin de permettre une circulation du fluide caloporteur dans la boucle B, nécessaire à l'évacuation de la puissance résiduelle.

Les principaux inconvénients de ce type d'installation sont dus à d'importantes contraintes thermiques pouvant endommager l'installation. En effet, pour des réacteurs nucléaires électrogènes, la température de l'eau dans la cuve 1 est généralement voisine de 300°C sous haute pression (de l'ordre de 150 bar pour un réacteur à eau pressurisée) alors que celle qui est dans la piscine 11 est voisine de 20°C à 40°C à une pression généralement proche de la pression atmosphérique.

Lorsque la vanne 15 est fermée, une des branches du circuit B est en contact avec une zone chaude, ici l'échangeur 7, et l'autre branche est en contact avec une zone froide, ici l'échangeur 12. Ce circuit comporte donc deux zones à des températures fortement différentes : une zone chaude vers 300°C et une zone froide vers 40°C. Si le fluide caloporteur est de l'eau, ce qui est généralement le cas dans les réacteurs à eau pressurisée, il y a risque de vaporisation partielle en fonction de la pression interne dans la boucle. C'est notamment le cas si cette pression est trop basse. Ceci implique l'utilisation de plusieurs vannes sur le circuit, qui n'ont pas été représentées sur la figure 1. La boucle B, participant à la fonction fondamental de sûreté. Par conséquent, toute complication de cette boucle est préjudiciable à la fiabilité de ce circuit.

A l'ouverture de cette (ou ces) vanne(s) 15, le déplacement du caloporteur crée des chocs thermiques sur les composants en raison des bouchons froid et chaud présents dans le circuit lorsque la vanne est fermée.

Si le fluide de cette boucle B est diphasique, il peut se produire au démarrage d'importantes oscillations du fluide en raison de la condensation brutale des bouchons de vapeur sur des parois froides. Ces oscillations sont bien entendu néfastes pour la fonction recherchée et peuvent créer localement d'importantes contraintes thermiques sur le matériel.

le brevet FR-A-2 502 828 décrit une installation nucléaire comportant au moins un échangeur de chaleur immergé dans une piscine utilisant un principe de verrou de densité, c'est-à-dire un dispositif pour verrou de densité, c'est-à-dire un dispositif pour isoler ou ouvrir la communication entre un circuit primaire (normalement chaud) et un circuit froid et fortement boré (circuit n° 41 = piscine). Le principe de ce verrou de densité est le contrôle de la position du gradient thermique dans le tampon de gradient supérieur 120 qui est situé à l'entrée d'une cloche 121.

### Exposé de l'invention

La présente invention a précisément pour objet un système de contrôle de l'échange thermique non plus par une ou plusieurs vannes mécaniques placées sur les tuyauteries, mais par un dispositif permettant de modifier les conditions d'échange thermique au niveau de l'échangeur en piscine. Un tel dispositif permet de supprimer les vannes sur le circuit, et apporte un gain en fiabilité.

Plus précisément, la présente invention a pour objet une vanne thermique pour un système de contrôle d'échanges thermiques, ledit système comportant au moins un échangeur immergé dans une piscine contenant un fluide, caractérisée en ce qu'elle comporte :
- un récipient emprisonnant le (ou les) échangeur(s),
- ledit récipient comportant au moins une ouverture dans une partie supérieure, ainsi que des moyens pour introduire le fluide par une partie inférieure du récipient,
- des moyens pour ouvrir ou fermer, partiellement ou totalement, l'ouverture de la partie supérieure ou bien les moyens pour introduire le fluide par la partie inférieure.

Lorsque l'échangeur est relié à une boucle dans laquelle circule un fluide caloporteur, il n'est alors plus nécessaire, avec la vanne thermique ci-dessus, d'utiliser une vanne pour commander la circulation du fluide caloporteur dans la boucle.

En effet, la vanne thermique selon l'invention commande l'échange de chaleur entre le fluide caloporteur de la boucle et le fluide de la piscine emprisonné dans le récipient.

Lorsqu'on désire bloquer l'échange thermique, on ferme l'ouverture supérieure du récipient ou les moyens d'introduction du fluide dans sa partie inférieure, et le fluide de la piscine emprisonné dans le récipient est chauffé par l'échangeur, puis entre en ébullition, formant de la vapeur dans le récipient. L'échange thermique entre l'échangeur et son environnement est alors fortement dégradé. Pour permettre à nouveau cet échange thermique, on ouvre l'ouverture supérieure du récipient (ou les moyens d'introduction du fluide dans sa partie inférieure).

Selon un mode particulier de réalisation, la vanne thermique comporte au moins une vanne à la sortie de l'ouverture de la partie supérieure. Il peut y avoir plusieurs vannes disposées en parallèles à la sortie de l'ouverture de la partie supérieure.

En outre, une cloche peut être disposée au-dessus de la (ou des) vanne(s), de manière à ce que la sortie de chaque vanne soit située au-dessus du bord inférieur de la cloche.

Les moyens pour introduire le fluide par une partie inférieure du récipient peuvent être constitués par une ou plusieurs ouvertures pratiquées dans la partie inférieure du récipient ou par un ou plusieurs tubes pour amener le fluide vers la partie inférieure du récipient.

Selon un autre mode particulier de réalisation, une ou plusieurs vannes sont placées soit directement à l'entrée de l'ouverture pratiquée dans la partie inférieure du récipient, soit sur le tube pour amener le fluide vers la partie inférieure du récipient.

La vanne thermique peut alors de plus comporter des moyens pour éviter une entrée du fluide par l'ouverture pratiquée dans la partie supérieure du récipient.

L'invention a également pour objet un système de contrôle comportant une vanne thermique telle que décrite ci-dessus, au moins un échangeur immergé dans une piscine, l'échangeur ayant une tuyauterie d'entrée et une tuyauterie de sortie qui pénètrent dans la partie inférieure du récipient.

D'autres aspect de l'invention apparaissent dans les revendications dépendantes.

### Brève description des figures

Les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- la figure 1, déjà décrite, illustre un exemple de réalisation, selon l'art antérieur, d'un système d'évacuation de puissance résiduelle d'un réacteur à eau pressurisée,
- la figure 2 illustre un premier mode de réalisation de l'invention,
- la figure 3 illustre un autre mode de réalisation de l'invention, sur une boucle de dérivation d'un circuit principal,
- la figure 4 représente un troisième mode de réalisation de l'invention,
- les figures 5 à 9 représentent des variantes des différents modes de réalisation de l'invention.

### Description détaillée de modes de réalisation de l'invention

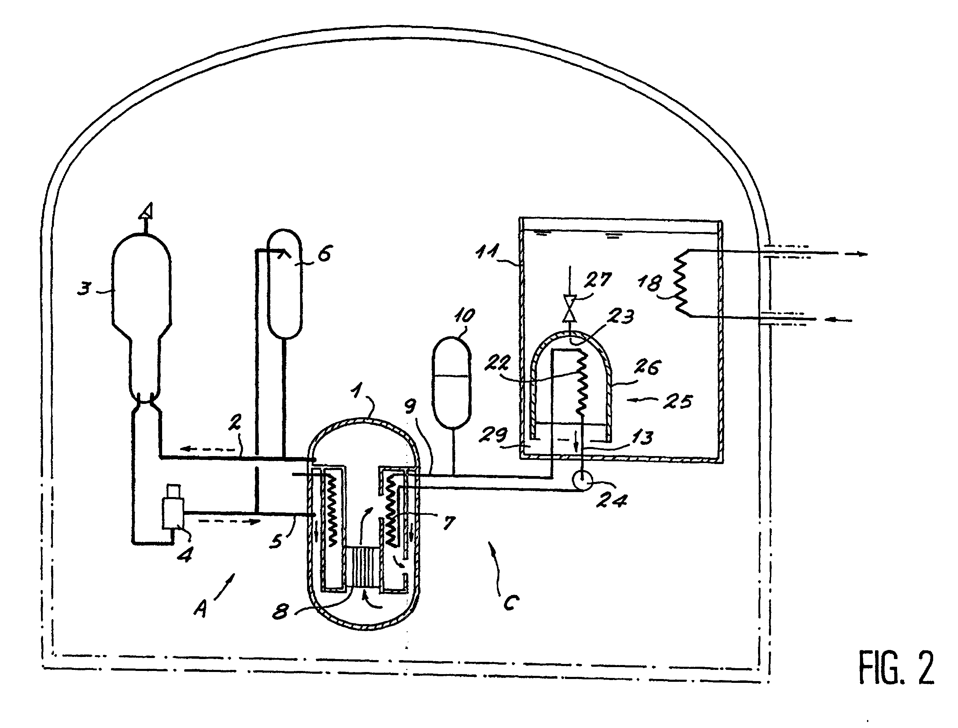

Sur la figure 2, des références identiques à celles de la figure 1 désignent les mêmes éléments. On reconnaît, entre autres, le réacteur 8 et son système 7 d'évacuation de la puissance résiduelle, comme décrit sur la figure 1. Sur la figure 2, la vanne mécanique 15 a été supprimée, et on l'a remplacée par le dispositif 25 dénommé vanne thermique relatif à la présente invention.

Ce dispositif comprend un récipient 26 en forme de vase renversé ou de cloche renversée, situé au-dessus d'un échangeur 22 et l'emprisonnant. Dans la partie supérieure de ce récipient est située une (ou plusieurs) ouverture(s) 23 par laquelle (ou lesquelles) de la vapeur peut s'échapper et qui est (sont) munie(s) d'une vanne 27. Dans un réacteur nucléaire, en fonctionnement normal à chaud, le fluide circulant dans la boucle C est maintenu sous pression et sa température est située dans une plage dont l'ordre de grandeur est généralement de 250° à 330°C. L'eau contenue dans la piscine 11 est à une pression proche de la pression atmosphérique et est à basse température, par exemple 20 à 40°C. Selon les besoins, un échangeur 18 refroidit la piscine 11.

Le dispositif selon l'invention fonctionne comme une vanne thermique qui commande l'échange de chaleur entre l'eau chaude du circuit C et l'eau froide de la piscine 11. Ainsi, lorsqu'on désire bloquer l'échange thermique, la vanne 27 est fermée et l'eau de la piscine emprisonnée sous la cloche 26 est chauffée par l'échangeur 22, puis entre en ébullition, formant un matelas de vapeur sous la cloche 26. L'excès d'eau liquide, refoulée par le matelas de vapeur, retourne à la piscine en passant sous la cloche 26 par une ouverture 29 à la base (ou partie inférieure) de celle-ci, par exemple en forme d'anneau. L'échangeur 22 se trouve alors dans une atmosphère de gaz où l'échange thermique est fortement dégradé. Pour permettre à nouveau l'échange thermique, il suffit d'ouvrir la vanne 27. La vapeur prisonnière de la cloche 26 s'échappe par l'ouverture 23 et par la vanne 27 vers l'eau de la piscine 11, et permet à l'eau froide de la piscine de pénétrer dans le vase renversé 26, par l'ouverture 29 située entre la cloche et le fond de la piscine. Cette eau froide vient lécher l'échangeur 22 et s'échauffe. Une convection naturelle s'établit dans la piscine entre la source chaude (échangeur 22) et la source froide (eau de la piscine 11) au travers de la vanne 27. Afin que cette convection soit suffisante, l'ouverture 23 au sommet de la cloche 26 et la vanne 27 sont choisies de taille suffisante. Eventuellement, plusieurs vannes en parallèle pourront être installées pour augmenter la taille de l'ouverture.

Si la température de l'eau dans la cloche approche la température de saturation, le transfert de chaleur s'effectue par ébullition de celle-ci le long de l'échangeur 22.

L'intérêt d'un tel dispositif est de supprimer toutes les vannes sur la boucle C entre l'échangeur 7 et l'échangeur 22, et de permettre un conditionnement permanent en température de cette boucle. Ce conditionnement peut être réalisé soit par convection forcée à l'aide de la pompe 24, soit en convection naturelle avec un léger débit dans la boucle C, débit dû à de faibles fuites thermiques à travers la bulle de vapeur prisonnière sous la cloche 26. Ce conditionnement permet de maintenir la boucle C à température sensiblement uniforme, évitant ainsi toute contrainte thermique sur les tuyauteries et composants.

Dans l'exemple qui vient d'être décrit, la vanne thermique était appliquée à un échangeur 22 situé sur une boucle indépendante C contenant un fluide monophasique maintenu en pression par le vase d'expansion 10.

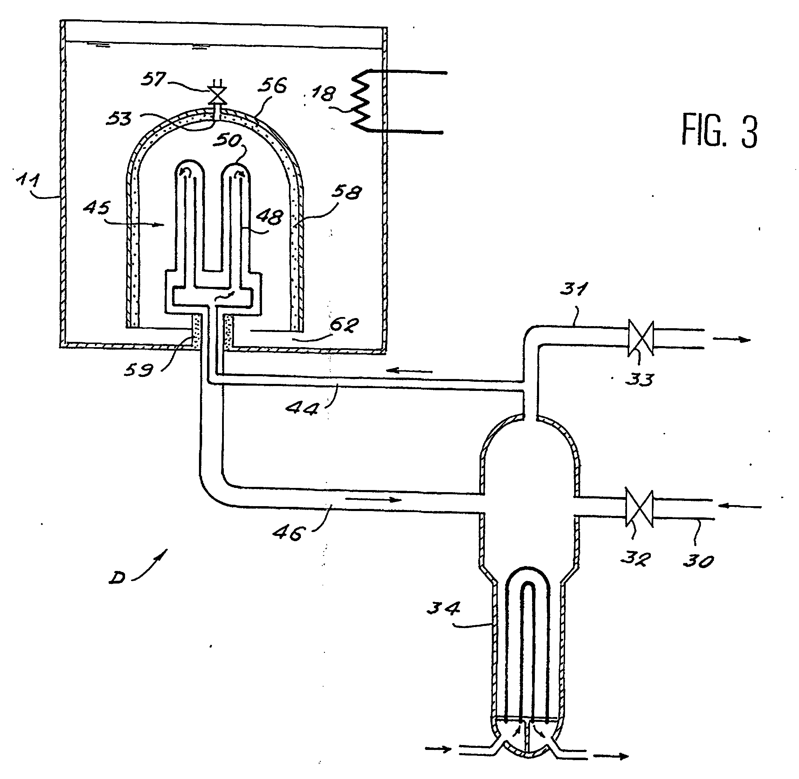

Sur la figure 3, on donne un autre exemple d'application de la vanne thermique, sur une boucle en dérivation d'un circuit principal avec un fluide diphasique.

Sur cette figure, le dispositif n'est plus appliqué à une simple boucle indépendante (comme la boucle C de la figure 2) mais à une boucle D branchée sur le circuit principal d'alimentation d'un générateur de vapeur d'un réacteur nucléaire.

Sur la figure 3, on reconnaît un générateur de vapeur 34 de type bouilleur à tubes en U renversé, couramment utilisé dans de nombreux réacteurs nucléaires électrogènes, avec son alimentation en eau 30 et la sortie vapeur 31 allant vers une turbine non représentée sur la figure 3. Sur ces tubes 30 et 31 se trouvent des vannes 32 et 33 permettant d'isoler le générateur de vapeur 34 si la situation le nécessite. Le circuit constitué par la tuyauterie 30, le générateur de vapeur 34 et le tuyau 31 représente la boucle principale. La boucle annexe D est constituée d'une tuyauterie 44 branchée sur le tuyau 31, d'un échangeur de chaleur 45, et d'une tuyauterie de retour 46 vers le générateur de vapeur 34.

Dans l'exemple qui est décrit ici, nous avons retenu pour la description un échangeur 45 constitué d'un faisceau de tubes à baïonnette, c'est-à-dire deux tubes coaxiaux. Le tube central 48 sert à conduire le fluide arrivant, ici de la vapeur sortant du générateur de vapeur. Le tube extérieur 50 fermé à une extrémité sert au retour du fluide et permet l'échange thermique. Ce type d'échangeur est déjà utilisé dans d'autres procédés et ne sera pas décrit plus en détail. Bien entendu, ce type d'échangeur n'est pas indispensable à la mise en oeuvre de la vanne thermique, d'autres types d'échangeurs sont également utilisables.

L'échangeur 45 est situé dans une piscine 11 contenant un liquide qui, pour l'application considérée, sera de l'eau, et est surmonté, d'un récipient 56 en forme de vase renversé ou de cloche renversée avec, dans la partie supérieure, une ouverture 53 et une vanne 57. L'échangeur 18 permet de maintenir l'eau de la piscine à la température désirée. En fonctionnement normal, c'est-à-dire lorsqu'il y a évacuation de la chaleur vers la turbine pour produire de l'électricité et pas d'évacuation de chaleur par la boucle D, la vanne 57 est fermée et les vannes 32 et 33 sont ouvertes. La vapeur sous pression, sortant du générateur de vapeur 34 à une température voisine de 250 à 300°C, est dirigée vers la turbine par le tuyau 31 et une partie de cette vapeur va vers l'échangeur 45 par le tuyau 44. La vanne 57 étant fermée, l'eau emprisonnée sous la cloche 56 s'élève en température et se transforme en vapeur vers 100°C (cette température dépend de la pression de la piscine, celle-ci étant prise à 1 bar à titre d'exemple). L'eau liquide restante est alors chassée vers la piscine par l'ouverture inférieure 62 de la cloche. Lorsque tout l'échangeur 45 se trouve dans la vapeur emprisonnée sous la cloche 56, l'échange thermique s'arrête. Ainsi, toute la chaleur produite par le générateur de vapeur 34 est dirigée vers la turbine.

Si la situation de fonctionnement nécessite une extraction de puissance par la boucle D, notamment lorsque le circuit principal est indisponible avec les vannes 32 et 33 fermées, il suffit d'ouvrir la vanne 57 au-dessus de la cloche 56. La vapeur contenue dans la cloche 56 s'échappe par la vanne 57 et se condense dans le reste de la piscine. Le niveau d'eau remonte dans la cloche 56, en renoyant le faisceau de tube de l'échangeur 45 pour permettre l'échange thermique. La vapeur provenant du générateur de vapeur 34 via le tuyau 44 se condense alors dans l'échangeur 45, et retourne au générateur de vapeur 34 par le tuyau 46.

L'intérêt du dispositif qui est décrit est d'éviter toute vanne sur le circuit dérivé, et de le maintenir chaud en permanence. En effet, sur de tels circuits selon l'art antérieur, il est en général placé au moins une vanne pour bloquer la circulation du fluide. En raison des niveaux de température (250°C à 300°C pour le fluide chaud et 20°C à 50°C pour le fluide froid de la piscine), il existe une faible convection naturelle à l'intérieur d'un même tuyau, introduisant des gradients thermiques pouvant être préjudiciables à l'installation.

Avec la présente invention, le gradient thermique est reporté au niveau d'un volume gazeux ayant un mauvais coefficient d'échange. La vanne (ou les vannes) mécanique(s) n'est (ne sont) plus nécessaire(s), et le circuit, maintenu chaud en permanence par un léger débit de fuite, ne subit plus de gradient thermique important.

Pour réduire les fuites thermiques lorsque le récipient est rempli de vapeur, celui-ci peut être revêtu intérieurement ou extérieurement par un isolant thermique 58 afin de diminuer les mouvements de convection de la vapeur à l'intérieur du récipient.

De même, un isolant thermique 59 peut être placé au niveau de l'entrée des tuyauteries 44 et 46 dans la piscine 11.

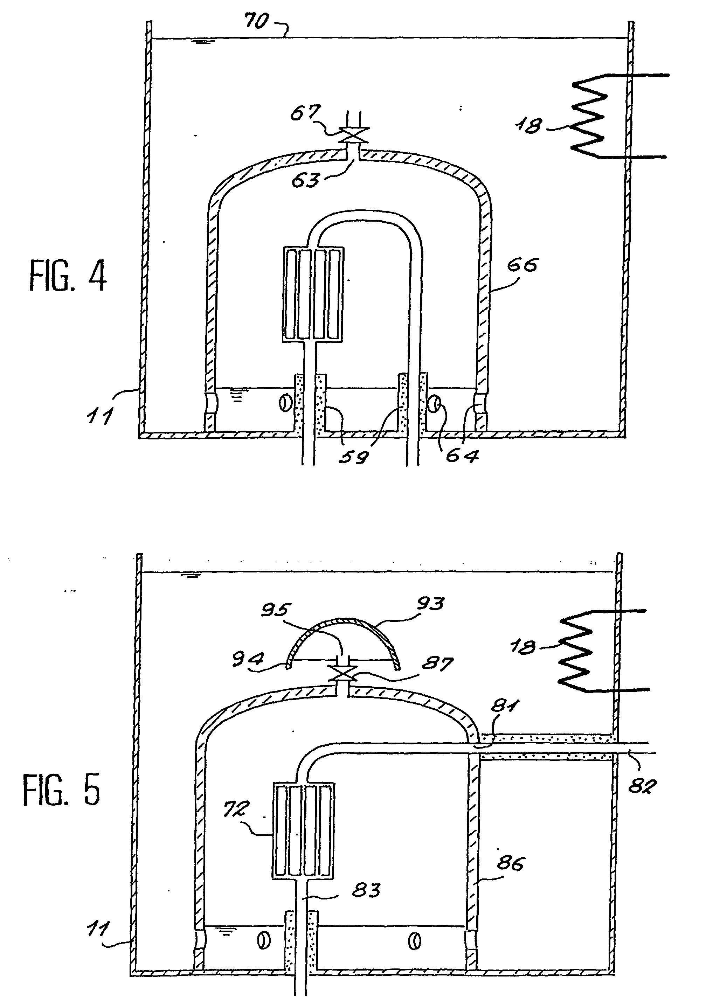

Dans les exemples de réalisation du dispositif selon les figures 2 et 3, le récipient a été représenté sans support. Il est bien évident qu'il peut être maintenu d'une manière ou d'une autre à la piscine comme illustré sur la figure 4. On peut le maintenir attaché par sa partie inférieure à l'aide d'un système à vis, à soudure, ou par tout autre moyen. Dans ce cas, l'ouverture dans la partie inférieure (29, 62) du récipient n'est plus un espace en forme d'anneau, mais une série d'ouvertures 64 pratiquées dans la partie inférieure du récipient 66 comme cela est représenté sur la figure 4. La référence 59 désigne encore un isolant thermique au niveau de l'entrée des tuyauteries dans la piscine, les références 63 et 67 une ouverture et une vanne situées dans la partie supérieure du récipient 66.

La nature de la vanne est bien entendu de type quelconque. Cependant si, pour des applications précises, on recherche un système fiable et sûr comme c'est le cas pour les réacteurs nucléaires, il est possible de placer plusieurs vannes en parallèle. Le réglage de la puissance extraite peut être obtenu, si besoin est, par une ouverture partielle des vannes ou du nombre de vannes. Toujours pour des raisons de sûreté, si cela est nécessaire, ces vannes peuvent être conçues pour s'ouvrir automatiquement dans le cas d'un défaut d'alimentation au niveau de la commande (électricité ou fluide de commande).

Afin d'assurer une bonne convection naturelle du fluide contenu dans la piscine, et comme illustré sur la figure 4, la sortie de la vanne 67 doit être sous le niveau libre 70 de la piscine. Mais si, pour une raison quelconque, la sortie de la vanne 67 n'est pas ou n'est plus placée sous le niveau 70, le dispositif est tout à fait opérationnel. Dans ces conditions, le fluide contenu dans la piscine 11 sortirait sous forme vapeur, si le niveau de température le permet, et serait rejeté à l'extérieur de la piscine.

Sur les figures 2 à 4 représentant le dispositif relatif à la présente invention, l'échangeur a ses alimentations entrée et sortie pénétrant dans la cloche par la partie inférieure de la piscine. Cette disposition a été retenue pour raison de simplicité de conception. Si pour une quelconque raison, et comme illustré sur la figure 5, l'une ou l'autre des deux tuyauteries d'alimentation de l'échangeur 72 (ou les deux), par exemple la tuyauterie 82 d'arrivée du fluide, devait entrer par le côté ou par le haut du récipient 86, le présent dispositif serait tout à fait opérationnel. Cependant, pour obtenir une bonne efficacité de la vanne thermique la (ou les) traversée(s) 81 du récipient 86 par la (ou les) tuyauterie(s) 82 d'alimentation de l'échangeur devrai(en)t avoir le minimum de fuite entre l'intérieur de la cloche 86 et l'eau de la piscine 11.

Si pour certaines conditions de fonctionnement il était nécessaire que la vanne 87 ait une grande section de passage, il se peut qu'il se produise une entrée d'eau par la vanne lorsque la puissance à évacuer est bien inférieure à la puissance pour laquelle a été dimensionnée la vanne thermique. En effet, à faible puissance, le débit de vapeur sera faible et de l'eau de la piscine 11 peut entrer dans la cloche 86 par la vanne 87 tandis que la vapeur sort aussi par la même vanne. L'écoulement vapeur est alors dans le sens ascendant et celui de l'eau dans le sens descendant. Si on désire éviter cet écoulement contre-courant entre la vapeur et l'eau, il est possible de disposer au-dessus de la vanne 87 une petite cloche 93 comme cela est indiqué sur la figure 5, de façon à ce que le bas 94 de cette cloche 93 soit en-dessous de la sortie 95 de la vanne 87. Cette cloche 93 crée une chicane pour la vapeur, empêchant l'eau froide de la piscine 11 de rentrer.

La forme et le volume du vase renversé importent peu, dans la mesure ou ce type de composant est capable d'emprisonner l'échangeur de chaleur et la bulle de vapeur nécessaire à la modification du coefficient d'échange thermique. Le présent dispositif est tout à fait opérationnel quel que soit le mode de réalisation du vase renversé. Ainsi, si pour différentes raisons la piscine devait être compartimentée, un des compartiments pourrait remplir la fonction de récipient ou de vase renversé, comme cela est illustré sur la figure 6. Sur cette figure, on reconnaît des cloisons 100 pour former un compartiment 101 comportant un échangeur 102. Ce compartiment 101 possède au moins deux ouvertures : l'une 103 dans sa partie supérieure surmontée d'une vanne 107, l'autre 104 dans la partie inférieure du compartiment. Le compartiment 101 ainsi décrit, exerce la même fonction que le vase renversé 26 de la figure 2 ou 56 de la figure 3.

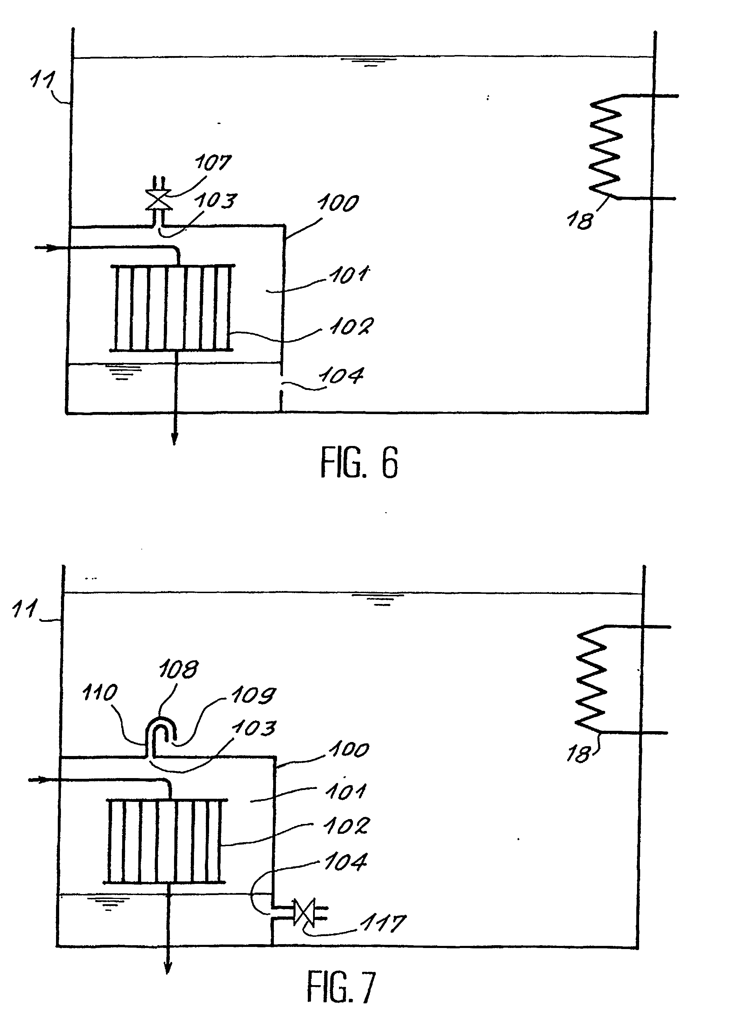

Si pour une quelconque raison, il n'était pas possible de disposer la vanne 107 au sommet du vase renversé ou du compartiment 101, il est tout à fait possible de la placer directement à l'entrée de l'ouverture (ou des ouvertures) en partie inférieure comme cela est représenté sur la figure 7. Pour éviter toute entrée d'eau par l'ouverture supérieure, on peut utiliser le dispositif 93 décrit sur la figure 5, ou un tuyau 110 recourbé en forme de crosse comme cela est représenté sur la figure 7. Pour être plus efficace, la sortie 109 du tuyau 110 sera placée de préférence, plus bas que la partie inférieure 108 du coude. Avec la vanne 117 placée en partie inférieure, le fonctionnement d'un tel dispositif est similaire à celui dont la vanne 107 est placée en partie supérieure. Lorsque la vanne 117 est fermée, le fluide qui est enfermé dans le compartiment s'échauffe au contact de l'échangeur 102 et se transforme en vapeur, si les conditions de température et de pression le permettent, dégradant ainsi fortement l'échange thermique, comme dans le cas du vase renversé décrit sur les figures 2 à 5. Le retour à un bon coefficient d'échange s'effectue par l'ouverture de la vanne 117.

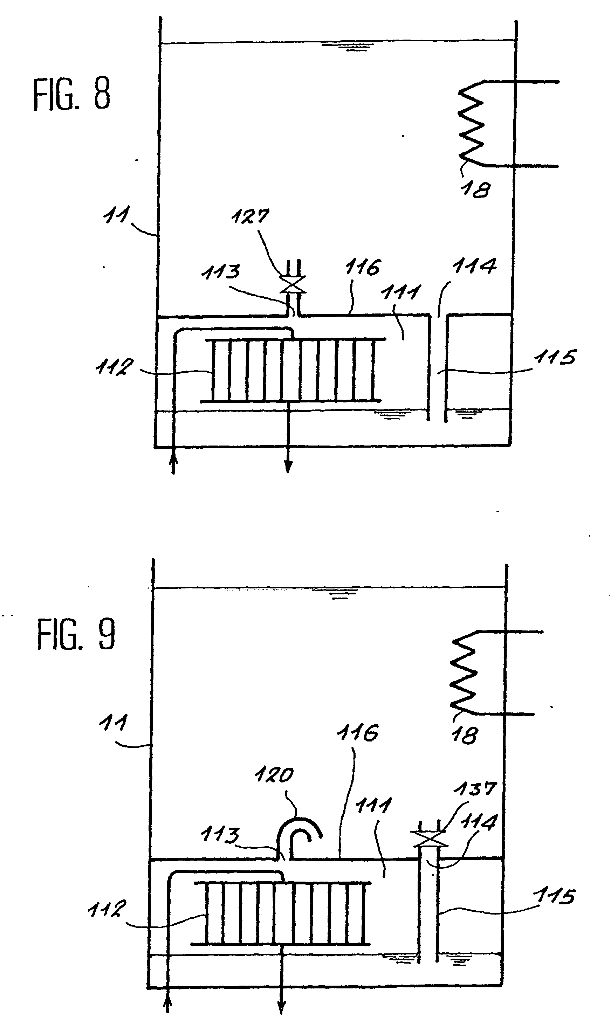

Un aménagement spécial de l'ouverture par laquelle l'eau de la piscine entre dans le compartiment peut être aménagé si cette ouverture ne peut être réalisée en partie basse. Ainsi, sur les figures 8 et 9, est représentée un compartiment 111 comportant l'échangeur 112 placé dans le fond de la piscine 11. Les deux ouvertures 113 et 114 sont placées dans la partie supérieure du compartiment 111 délimité par la cloison 116. L'ouverture d'entrée 114 comporte un tube 115 à l'intérieur du compartiment pour amener l'eau de la piscine vers le fond du compartiment. La vanne mécanique commandant le flux de chaleur peut être placée indifféremment sur l'une ou l'autre des ouvertures, comme cela est représenté par la vanne 127 sur la figure 8 et la vanne 137 sur la figure 9. Si la vanne est placée sur l'ouverture d'entrée 114, un système 120 pour empêcher l'eau de pénétrer par l'ouverture de sortie 113 doit être employé, similaire par exemple au dispositif 110 de la figure 7 ; ce peut être aussi un dispositif similaire au dispositif 93 de la figure 5, comportant alors une cloche dont la partie ouverte est dirigée vers l'ouverture de la partie supérieure 113 du compartiment, un tuyau fixé en sortie de cette ouverture débouchant dans l'espace intérieur de la cloche. Dans la description ci-dessus, nous avons considéré une seule vanne en entrée ou en sortie du compartiment, ou un seul tuyau 115 ; mais si, pour des raisons de réalisation, il devait y avoir plusieurs vannes ou tuyaux, cela ne changerait rien à la présente invention.

Le dispositif de vanne thermique présenté ici a été appliqué à des systèmes de réacteur à eau fonctionnant à un niveau élevé de température (250°C à 300°C) conduisant à la formation d'une bulle de vapeur sous la cloche. Si, pour d'autres applications, ou pour d'autres régimes de fonctionnement à plus basse température de ces réacteurs, il n'y avait pas de formation de bulle de vapeur, le présent dispositif de vanne thermique serait également tout à fait opérationnel. En effet, lorsque la vanne est fermée, le liquide contenu à l'intérieur de la cloche s'échauffe et a tendance à monter par effet de convection naturelle. Ce liquide chaud ne peut s'échapper de la cloche car la vanne est fermée. La température atteinte par ce liquide correspond alors à la température du fluide caloporteur circulant dans l'échangeur. L'échange thermique est ainsi arrêté. Il reprend après ouverture de la vanne.

## Revendications

1. Vanne thermique pour un système de contrôle d'échanges thermiques, ledit système comportant au moins un échangeur (22, 45, 72, 102, 112) dans lequel circule un fluide caloporteur, cet échangeur étant immergé dans une piscine (11) contenant un fluide, cette vanne comportant un récipient (26, 56, 66, 86, 100) ayant au moins une ouverture (23, 53, 63, 103, 113) dans sa partie supérieure,
ledit récipient comporte des moyens (29, 62, 64, 104, 114, 115) pour introduire le fluide de la piscine par une partie inférieure du récipient,
**caractérisée en ce que** :
- le récipient emprisonne l'échangeur,
et **en ce qu'**elle comporte :
- des moyens (27, 57, 67, 87, 107, 117, 127, 137) pour ouvrir ou fermer, partiellement ou totalement, l'ouverture de la partie supérieure ou bien les moyens pour introduire le fluide de la piscine par la partie inférieure, le fluide de la piscine contenu à l'intérieur du récipient étant vaporisé, lorsque l'ouverture supérieure est fermée, réduisant ainsi l'échange thermique entre le fluide caloporteur et le fluide de la piscine, ou bien s'échauffant et montant par convection, lorsque l'ouverture dans la partie supérieure est ouverte, permettant l'échange de chaleur entre le fluide caloporteur et le fluide de la piscine.

2. Vanne thermique selon la revendication 1, comportant au moins une vanne (27, 57, 67, 87, 107, 127) à la sortie de l'ouverture de la partie supérieure.

3. Vanne thermique selon la revendication 2, comportant plusieurs vannes (27, 57, 67, 87, 107, 127) disposées en parallèles à la sortie de l'ouverture de la partie supérieure.

4. Vanne thermique selon l'une des revendications 2 ou 3, une cloche (93) étant disposée au-dessus de la (ou des) vanne(s) (87) de manière à ce que la sortie (95) de chaque vanne soit située au-dessus du bord inférieur (94) de la cloche (93).

5. Vanne thermique selon l'une des revendications précédentes, les moyens pour introduire le fluide par une partie inférieure du récipient étant constitués par une ou plusieurs ouvertures (64, 104) pratiquées dans la partie inférieure du récipient.

6. Vanne thermique selon l'une des revendications 1 à 4, les moyens pour introduire le fluide par une partie inférieure du récipient étant constitués par un ou plusieurs tubes (115) pour amener le fluide vers la partie inférieure du récipient.

7. Vanne thermique selon la revendication 1 et l'une des revendications 5 ou 6, une ou plusieurs vannes (117, 137) étant placées soit directement à l'entrée de l'ouverture (104) pratiquée dans la partie inférieure du récipient, soit sur le tube (115) pour amener le fluide vers la partie inférieure du récipient.

8. Vanne thermique selon la revendication 7, comportant des moyens (110, 120) pour éviter une entrée du fluide par l'ouverture (103, 113) pratiquée dans la partie supérieure du récipient.

9. Vanne thermique selon la revendication 8, les moyens pour éviter une entrée du fluide par l'ouverture supérieure comportant un tuyau en forme de crosse ayant une sortie (109) située plus bas que le coude (108).

10. Vanne thermique selon la revendication 8, les moyens pour introduire le fluide par une partie inférieure du récipient (26, 56, 86, 100) comportant une cloche (93) présentant une partie ouverte et un espace intérieur, la partie ouverte étant tournée vers l'ouverture supérieure du récipient (23, 53, 63, 103, 113), ainsi qu'un tuyau reliant l'ouverture supérieure du récipient à l'espace intérieur de la cloche.

11. Système de contrôle comportant une vanne thermique selon l'une des revendications précédentes, au moins un échangeur (22, 45, 72, 102, 112) immergé dans une piscine (11), l'échangeur ayant une tuyauterie d'entrée (9, 44) et une tuyauterie de sortie (13, 46) qui pénètrent dans la partie inférieure du récipient.

12. Système de contrôle comportant une vanne thermique selon l'une des revendications 1 à 10, l'échangeur ayant une tuyauterie d'entrée (82) et une tuyauterie de sortie (83), dont l'une ou l'autre ou les deux pénètre(nt) par le côté ou le haut du récipient.

13. Système de contrôle selon l'une des revendications 11 ou 12, des isolants thermiques (59) étant prévus sur les tuyauteries d'entrée (9, 44, 82) et de sortie (13, 46, 83).

14. Système de contrôle selon l'une des revendications 11 à 13, comportant en outre un échangeur (18) de contrôle de la température du fluide contenu dans la piscine (11).

15. Système de contrôle selon l'une des revendications 11 à 14, comportant en outre une boucle pour véhiculer un fluide, ladite boucle étant reliée à la tuyauterie d'entrée (9, 44, 82) à travers laquelle passe le fluide en direction de l'échangeur (22, 45, 72, 102, 112) et à la tuyauterie de sortie (13, 46, 83) à travers laquelle revient le fluide à partir de l'échangeur (22, 45, 72, 102, 112).

16. Système de contrôle selon la revendication 15, une pompe (24) étant placée sur la boucle pour véhiculer le fluide.

17. Système de contrôle selon l'une des revendications 15 ou 16, un vase d'expansion (10) permettant de maintenir en pression le fluide circulant dans la boucle.

## Patentansprüche

1. Thermisches Ventil zur Steuerung eines Wärmeaustausch-Systems, wobei dieses System wenigstens einen Austauscher (22, 45, 72, 102, 112) umfasst, in dem ein Wärmeübertragungsfluid zirkuliert, wobei dieser Wärmeaustauscher eingetaucht ist in ein Becken (11), das eine Flüssigkeit enthält, dieses Ventil einen Behälter (26, 56, 66, 86, 100) mit wenigstens einer Öffnung (23, 53, 63, 103, 113) in seinem oberen Teil umfasst, und dieser Behälter Einrichtungen (29, 62, 64, 104, 114, 115) für ein Eindringen der Flüssigkeit des Beckens durch einen unteren Teils des Behälters umfasst,
**dadurch gekennzeichnet,**
- **dass** der Behälter den Wärmeaustauscher umgibt,
und dadurch, dass es umfasst:
- Einrichtungen (27, 57, 67, 87, 107, 117, 127, 137) zum Öffnen oder Schließen, teilweise oder ganz, der Öffnung des oberen Teils oder auch der Einrichtungen für ein Eindringen der Flüssigkeit des Beckens durch den unteren Teil, wobei die im Innern des Behälters enthaltene Flüssigkeit verdampft, wenn die obere Öffnung geschlossen ist, was den Wärmeaustausch zwischen dem Wärmeübertragungsfluid und der Flüssigkeit des Beckens reduziert, oder sich durch Konvektion erwärmt und aufsteigt, wenn die Öffnung in dem oberen Teil offen ist, so dass der Wärmeaustausch zwischen dem Wärmeübertragungsfluid und der Flüssigkeit des Beckens stattfindet.

2. Thermisches Ventil nach Anspruch 1 mit wenigstens einem Ventil (27, 57, 67, 87, 107, 127) am Ausgang der Öffnung des oberen Teils.

3. Thermisches Ventil nach Anspruch 2 mit mehreren am Ausgang des oberen Teil parallel angeordneten Ventilen (27, 57, 67, 87, 107, 127).

4. Thermisches Ventil nach einem der Ansprüche 2 oder 3, wobei eine Glocke (93) über dem (oder den) Ventil(en) (87) so angeordnet ist, dass dieser Ausgang (95) von jedem Ventil sich oberhalb des unteren Rands (94) der Glocke (93) befindet.

5. Thermisches Ventil nach einem der vorangehenden Ansprüche, wobei die Einrichtungen für ein Eindringen der Flüssigkeit durch einen unteren Teil des Behälters durch eine oder mehrere Öffnungen (64, 104) gebildet werden, die in dem unteren Teil des Behälters vorgesehen sind.

6. Thermisches Ventil nach einem der Ansprüche 1 bis 4, bei dem die Einrichtungen für ein Eindringen der Flüssigkeit durch einen unteren Teil des Behälters durch ein Rohr oder mehrere (115) gebildet werden, um die Flüssigkeit in den unteren Teil des Behälters zu leiten.

7. Thermisches Ventil nach Anspruch 1 und einem der Ansprüche 5 oder 6, wobei man ein Ventil oder mehrere (117, 137) entweder direkt am Eingang der in dem unteren Teil des Behälters vorgesehenen Öffnung (104) anordnet oder in dem Rohr (115) zur Einleitung der Flüssigkeit in den unteren Teil des Behälters.

8. Thermisches Ventil nach Anspruch 7 mit Einrichtungen (110, 120), um ein Eindringen der Flüssigkeit durch die in dem oberen Teil des Behälters vorgesehene Öffnung (103, 113) zu verhindern.

9. Thermisches Ventil nach Anspruch 8, wobei die Einrichtungen zum Verhindern eines Eindringens der Flüssigkeit durch die obere Öffnung ein krummstabförmiges Rohr mit einem Ausgang (109) umfassen, der sich auf einem tieferen Niveau befindet als der Krümmungsscheitelpunkt (108).

10. Thermisches Ventil nach Anspruch 8, wobei die Einrichtungen zum Einleiten der Flüssigkeit in einen unteren Teil des Behälters (26, 56, 86, 100) eine Glocke (93) umfassen, die einen offenen Teil und einen Innenraum aufweist, wobei der offene Teil der oberen Öffnung des Behälters (23, 53, 63, 103, 113) zugewandt ist, sowie ein Rohr umfassen, das die obere Öffnung des Behälters mit dem Innenraum der Glocke verbindet.

11. Kontrollsystem mit einem thermischen Ventil nach einem der vorangehenden Ansprüche und wenigstens einem Wärmeaustauscher (22, 45, 72, 102, 112), eingetaucht in ein Becken (11), wobei der Wärmeaustauscher ein Eingangsrohr (9, 44) und ein Ausgangsrohr (13, 46) umfasst, die in den unteren Teil des Behälters eindringen.

12. Kontrollsystem mit einem thermischen Ventil nach einem der Ansprüche 1 bis 10, wobei der Wärmeaustauscher ein Eingangsrohr (82) und ein Ausgangsrohr (83) umfasst, von denen das eine oder das andere, oder alle beide, seitlich oder oben in den Behälter eindringt bzw. eindringen.

13. Kontrollsystem mit einem thermischen Ventil nach einem der Ansprüche 11 oder 12, wobei Wärmeisolationseinrichtungen (59) in dem Eingangsrohr (9, 44, 82) und dem Ausgangsrohr (13, 46, 83) vorgesehen sind.

14. Kontrollsystem mit einem thermischen Ventil nach einem der Ansprüche 11 bis 13 mit außerdem einem Wärmeaustauscher (18) zur Kontrolle der Temperatur der in dem Becken (11) enthaltenen Flüssigkeit.

15. Kontrollsystem mit einem thermischen Ventil nach einem der Ansprüche 11 bis 14 mit außerdem einer Schleife, um ein Fluid zu leiten, wobei diese Schleife mit dem Eingangsrohr (9, 44, 82) verbunden ist, in dem das Fluid in Richtung Wärmeaustauscher (22, 45, 72, 102, 112) fließt, und mit dem Ausgangsrohr (13, 46, 83), in dem das Fluid den Wärmeaustauscher (22, 45, 72, 102, 112) verlässt.

16. Kontrollsystem nach Anspruch 15, bei dem eine Pumpe (24) in die das Fluid leitende Schleife eingebaut ist.

17. Kontrollsystem mit einem thermischen Ventil nach einem der Ansprüche 15 oder 16, bei dem ein Expansionsgefäß (10) ermöglicht, das in der Schleift zirkulierende Fluid unter Druck zu halten.

## Claims

1. Thermal valve for a heat exchange control system, said system comprising at least one exchanger (22, 45, 72, 102, 112) in which circulates a heat transfer fluid, said exchanger being immersed in a pool (11) containing a fluid, said valve having a container (26, 56, 66, 86, 100) with at least one opening (23, 53, 63, 103, 113) in its upper part, said container having means (29, 62, 64, 104, 114, 115) for introducing the pool fluid through a lower part of the container, **characterized in that** the container traps the exchanger and that it incorporates means (27, 57, 67, 87, 107, 117, 127, 137) for partly or totally opening or closing the opening in the upper part or means for introducing the pool fluid contained within the container being vaporized, when the upper opening is closed, thus reducing the heat exchange between the heat transfer fluid and the pool fluid, or heating and rising by convection, when the opening in the upper part is open, permitting the heat exchange between the heat transfer fluid and the pool fluid.

2. Thermal valve according to claim 1, comprising at least one valve (27, 57, 67, 87, 107, 127) at the outlet of the opening of the upper part.

3. Thermal valve according to claim 2, comprising several valves (27, 57, 67, 87, 107, 127) arranged in parallel at the outlet of the opening of the upper part.

4. Thermal valve according to one of the claims 2 or 3, a bell (93) being located above the valve or valves (87), so that the outlet (95) of each valve is above the lower edge (94) of the bell (93).

5. Thermal valve according to any one of the preceding claims, the means for introducing the fluid by a lower part of the container being constituted by one or more openings (64, 104) in the lower part of the container.

6. Thermal valve according to any one of the claims 1 to 4, the means for introducing the fluid through a lower part of the container being constituted by one or more tubes (115) for supplying the fluid to the lower part of the container.

7. Thermal valve according to claim 1 and one of the claims 5 or 6, one or more valves (117, 137) being placed either directly at the entrance of the opening (104) made in the lower part of the container or on the tube (115) for supplying the fluid to the lower part of the container.

8. Thermal valve according to claim 7, comprising means (110, 120) for preventing fluid entering through the opening (103, 113) in the upper part of the container.

9. Thermal valve according to claim 8, the means for preventing the entry of fluid through the upper opening having a gunstock-shaped pipe with an outlet (109) located lower than the bend (108).

10. Thermal valve according to claim 8, the means for introducing the fluid through a lower part of the container (26, 56, 86, 100) having a bell (93) with an open part and an internal space, the open part being turned towards the upper opening of the container (23, 53, 63, 103, 113), as well as a pipe linking the upper opening of the container with the internal space of the bell.

11. Control system incorporating a thermal valve according to any one of the preceding claims, at least one exchanger (22, 45, 72, 102, 112) being immersed in a pool (11), the exchanger having an entrance pipe (9, 44) and an outlet pipe (13, 46) penetrating the lower part-of the container.

12. Control system incorporating a thermal valve according to one of the claims 1 to 10, the exchanger having an inlet pipe (82) and an outlet pipe (83), whereof one or both penetrate through the side or top of the container.

13. Control system according to either of the claims 11 and 12, thermal insulants (59) being provided on the inlet (9, 44, 82) and outlet (13, 46, 83) pipes.

14. Control system according to one of the claims 11 to 13, also comprising an exchanger (18) for controlling the temperature of the fluid in the pool (11).

15. Control system according to one of the claims 11 to 14, also comprising a loop for carrying a fluid, said loop being connected to the entrance pipe (9, 44, 82) through which passes the fluid in the direction of the exchanger (22, 45, 72, 102, 112) and to the outlet pipe (13, 46, 83) through which the fluid returns from the exchanger (22, 45, 72, 102. 112).

16. Control system according to claim 15, a pump (24) being placed on the loop for carrying the fluid.

17. Control system according to claim 15 or 16, an expansion tank (10) making it possible to keep under pressure the fluid flowing in the loop.
